Europäisches Patentamt

European Patent Office

Office européen des brevets

(19)

(11) Veröffentlichungsnummer: **0 075 566**
**B1**

(12)

# EUROPÄISCHE PATENTSCHRIFT

(45) Veröffentlichungstag der Patentschrift:
**11.09.85**

(51) Int. Cl.⁴: **C 02 F 1/50**

(21) Anmeldenummer: **82900931.5**

(22) Anmeldetag: **01.04.82**

(86) Internationale Anmeldenummer:
**PCT/CH 82/00051**

(87) Internationale Veröffentlichungsnummer:
**WO 82/03381 (14.10.82 Gazette 82/25)**

(54) **VERFAHREN ZUR HERSTELLUNG VON FORMKÖRPERN ZUR KEIMFREIHALTUNG VON WASSER UND WÄSSERIGEN LÖSUNGEN.**

(30) Priorität: **02.04.81 CH 2262/81**

(43) Veröffentlichungstag der Anmeldung:
**06.04.83 Patentblatt 83/14**

(45) Bekanntmachung des Hinweises auf die Patenterteilung:
**11.09.85 Patentblatt 85/37**

(84) Benannte Vertragsstaaten:
**AT BE CH DE FR GB LI LU NL SE**

(56) Entgegenhaltungen:
**CH - A - 290 594**
**DE - A - 2 530 487**
**FR - A - 2 171 310**
**FR - A - 2 272 046**
**US - A - 4 145 291**

(73) Patentinhaber: **MEDICHEM AKTIENGESELLSCHAFT,
FL-9495 Triesen (LI)**

(72) Erfinder: **GAUTSCHI, Kurt, Limmatthalstrasse 11,
CH-8049 Zürich (CH)**
Erfinder: **SIGRIST, Walter, Zypressenstrasse 122,
CH-8004 Zürich (CH)**

(74) Vertreter: **Schmid, Rudolf et al, c/o ISLER & SCHMID
Patentanwaltsbureau Walchestrasse 23, CH-8006 Zürich
(CH)**

**Beschreibung**

Zur Entkeimung von Wasser und wässerigen Lösungen sowie zur Herstellung von Trinkwasser sind viele Methoden bekannt. Die rein physikalische Reinigung von Wasser in Kläranlagen, in welchen das Wasser im allgemeinen durch verschiedene Sandschichten filtriert und eventuell zusätzlich mit Aktivkohle behandelt wird, eignet sich vor allem für die Großwasserversorgung. Wasser läßt sich jedoch auch durch Ultraviolettbestrahlung, durch Ozonisierung, durch Chlorierung oder auf oligodynamischem Wege so weit reinigen und entkeimen, daß es unbedenklich als Trinkwasser verwendet werden kann.

Das oligodynamische Prinzip beruht im wesentlichen auf der Fähigkeit kleinster Mengen gediegener Metalle und Metallsalze, in wäßrigem oder gallertigem Milieu niedere Organismen abzutöten oder an ihrer Fortpflanzung zu hindern.

Auf diesem Prinzip wurden verschiedene Verfahren und Mittel zur Entkeimung von Wasser entwickelt, die z. B. für Schwimmbäder, Trinkwasserversorgung in Eisenbahnzügen, Campingplätzen, Schiffen, auf Reisen und dergleichen, die weit verbreitet sind.

So wurde z. B. in der FR-A-2 171 310 ein Verfahren zur Herstellung eines Bakterizides für die Behandlung von Wasser vorgeschlagen, welches darin besteht, ein Silberhalogenid aus seiner Schmelze zu einem Blatt zu verformen und es vor oder nach dem Verformen durch Hitzebehandlung von überschüssigem Halogen zu befreien.

Ferner wurde in der CH-A-290 594 eine Masse für die Sterilisierung von Flüssigkeiten vorgeschlagen, welche als aktiven Bestandteil Silbersilikat im Gemisch mit einem Träger oder aufgebracht auf einen solchen beschreibt.

Alle bisher bekannten Methoden und Mittel ermöglichen die Herstellung eines einwandfreien Trinkwassers und dessen Aufbewahrung während einer beschränkten Zeit zwischen einigen Stunden und einigen Wochen. Die als Notvorrat vom Wasserwerk der Stadt Zürich erhältlichen Trinkwasserkonserven in 1-Liter-Plastikbehältern garantieren sogar einen einwandfreien Zustand des Inhaltes während 6 Monaten bis zu 1 Jahr. Hingegen war eine längere Aufbewahrungsdauer für Trinkwasser bisher nicht bekannt.

Der Erfindung liegt deshalb die Aufgabe zugrunde, die Aufbewahrung von Wasser und wässerigen Lösungen, insbesondere aber von Trinkwasser über mehrere Jahre zu ermöglichen.

Dieses und andere Ziele lassen sich mit den neuen Tabletten, welche die Keimfreihaltung nicht wie bisher mit einer in Wasser leichtlöslichen, sondern einer schwerlöslichen Metallverbindung mit einer Löslichkeit von höchstens 100 mg/Liter erzielen, die in eine Form gebracht ist, in welche sie in der wässerigen Umgebung nicht zerfällt. Im Gegensatz zu den bekannten aligodynamischen Verfahren, mit denen eine rasche einmalige Entkeimungswirkung erzielt wird, erlaubt die vorliegende Erfindung eine Langzeitwirkung, da die wirksame Konzentration an Metallionen gemäß dem Löslichkeitsprodukt des Salzes sehr rasch erreicht wird und anschließend bis zur vollständigen Auflösung der Metallverbindung konstant bleibt.

Gegenstand der vorliegenden Erfindung ist ein Verfahren zur Herstellung von metallsalzhaltigen Tabletten zur protrahierten Wirkstoff-Freigabe, welche Tabletten in der wässerigen Umgebung nicht zerfallen, das dadurch gekennzeichnet ist, daß man mindestens eine in Wasser schwerlösliche, die Entwicklung von Keimen verhindernde Metallverbindung mit oder ohne Trägersubstanzen unter einem Druck von mindestens 748 MPa verformt und die Tablette aktiviert, indem man sie derart behandelt, daß sie erst eine schwerlösliche Metallverbindung mit einer Löslichkeit von höchstens 100 mg/Liter im Wasser bilden, wobei eine rasche einmalige Entkeimungswirkung durch eine aligodynamischen wirksamen Konzentration an Metallionen gemäß dem Löslichkeitsprodukt des Salzes erzielt wird, und daß nachher diese wirksame Konzentration bis zur vollständigen Auflösung der Metallverbindung konstant bleibt.

In der nachstehenden Beschreibung wird hauptsächlich auf die Verwendung von Silberverbindungen verwiesen. Obwohl solche Verbindungen für gewisse Anwendungsgebiete bevorzugt werden, können auch andere schwerlösliche Metallverbindungen, wie Kupfer-, Zinn-, Quecksilberverbindungen, verwendet werden.

Die Verwendung einer schwerlöslichen Metallverbindung, z. B. einer schwerlöslichen Silberverbindung, wie Silberchlorid AgCl, Silberbromid AgBr, Silberphosphat $Ag_3PO_4$, Silberoxid/Silberhydroxid, Silbercarbonat $Ag_2CO_3$, usw., erlaubt somit die Konstanthaltung einer wirksamen Silberionenkonzentration, die zur Keimfreihaltung von reinem Wasser oder bestimmten wässerigen Lösungen notwendig und hinreichend ist. Um in bereits keimbefallenem Wasser oder wässerigen Lösungen rasch und wirksam alle Keime abzutöten, sind z. B. bei Verwendung von Silberchlorid- oder -bromid-Tabletten diese zu »aktivieren«. Dadurch erhält man zu Beginn der Silberbehandlung eine um etwa eine Zehnerpotenz höhere Silberionenkonzentration im Vergleich zum reinen Silberhalogenid. Die »Aktivierung« kann durch Beimengung eines leichter löslichen Silbersalzes, z. B. Silberphosphat, Silbercarbonat oder Silberhydroxid in der Größenordnung von etwa 1 bis 10% zum Silberchlorid oder -bromid erfolgen.

Andererseits kann die Aktivierung auch durch thermische oder chemische Behandlung erfolgen, z. B. durch kurzes, im allgemeinen höchstens 10 Sekunden langes Erhitzen der Oberfläche auf hohe Temperaturen, vorzugsweise auf etwa 1000°C, z. B. mit heißen Gasen, durch Säurebehandlung, usw. Hierbei entsteht an der Oberfläche der Tablette mindestens zum Teil eine Silberoxid/Silberhydroxid-Schicht, welche ein größeres Löslichkeitsprodukt aufweist.

In der vorliegenden Beschreibung ist Silberhydroxid und Silberoxid als identisch zu betrachten, da Silberhydroxid bekanntlich einem Alterungsprozeß unterliegt, der unter Wasserabspaltung vom Hydroxid zum Oxid führt.

Eine genügend hohe, initiale Silberionenkonzentration ist notwendig, um bereits keimhaltiges Wasser oder wässerige Lösungen wirksam zu behandeln, d. h. zu entkeimen.

In der folgenden Tabelle I sind die Löslichkeitsprodukte und der Silbergehalt einer äquilibrierten wässerigen Lösung in Milligramm/Liter für einige schwerlösliche Silberverbindungen zusammengestellt:

Tabelle I

| Verbindung | | Formel | Löslichkeitsprodukt | Silbergehalt einer äquilibrierten Lösung in mg/Liter |
|---|---|---|---|---|
| a) | Silberchlorid | $AgCl$ | $1,7 \times 10^{-10}$ | 1,408 |
| b) | Silberbromid | $AgBr$ | $3,3 \times 10^{-13}$ | $6,204 \times 10^{-2}$ |
| c) | Silbercarbonat | $AgCO_3$ | $8,2 \times 10^{-12}$ | 21,8 |
| d) | Silberhydroxid | $AgOH$ | $2 \times 10^{-8}$ | 15,2 |
| e) | Silberphosphat | $Ag_3PO_4$ | $3,4 \times 10^{-14}$ | 46,4 |

Während die Verbindungen a) und b), insbesondere die Verbindung a) infolge ihrer Schwerlöslichkeit für die unbedenkliche Langzeitbehandlung von Trinkwasser am besten geeignet sind, sind die Verbindungen c), d) und e) hervorragend zum Dotieren, d. h. Aktivieren von a) oder b) zu empfehlen; als Alleinmittel sind sie jedoch infolge ihrer höheren Löslichkeit für Trinkwasser nicht mehr ungefährlich, wohl aber für verschiedene andere Verwendungen sehr gut geeignet.

Die schwerlösliche Silber- oder andere geeignete Metallverbindung wird in Form einer aktivierten Tablette zum Einsatz gebracht. Das Wesen einer solchen Tablette besteht darin, daß Metallionen in gleichem Maße, wie diese mit Mikroorganismen in wässeriger Lösung eine feste Bindung eingehen, gemäß dem Löslichkeitsprodukt aus der Tablette wieder in Lösung gehen. Dies gewährt bei geschlossenen Behältnissen eine zeitlich praktisch unbegrenzte Haltbarkeit (d. h. Keimfreihaltung) von Wasser oder wässerigen Lösungen auch bei wiederholter Rekontamination.

Solcherart, z. B. mit Silberchlorid behandeltes Trinkwasser ist, von der Silberionenkonzentration aus beurteilt, gesundheitlich bedenkenlos. In geschmacklicher Hinsicht ist es noch nach mehreren Jahren unverändert. Ferner ist keinerlei Verfärbung des Wassers festzustellen, und seine bakteriologische Zusammensetzung ist einwandfrei.

Die Tabletten werden hergestellt, indem die gewünschte Menge einer oder mehrerer schwerlöslicher Silberverbindungen mit einem Druck von mindestens 785 bis zu 1472 MPa zu Tabletten von gewünschter Form und Größe gepreßt werden.

Bei alleiniger Anwendung von Silbercarbonat, Silberoxid/Silberhydroxid, Silberphosphat werden die Tabletten mit Vorteil in eine ionendurchlässige Kunststoffmembran, z. B. Metricel® VF-6 der Firma Gelman, Porengröße 0,45 µm, eingeschweißt, da sie bei starker mechanischer Beanspruchung (z. B. Ultraschall) oder in der Wärme im Wasser zerfallen können.

Die erfindungsgemäßen Tabletten eignen sich vor allem

(1) zur Trinkwasserkonservierung (Zivilschutz, Kriegsvorsorge, Militär, in tropischen Ländern, Säuglingsernährung),
(2) zur Keimfreihaltung von Trinkwasser für Nutztiere,
(3) in Klimaanlagen zur Keimfreihaltung des zugeführten Wassers,
(4) in Spitälern (in Atemluftbefeuchtern und anderen Wasser verwendenden medizinischen Geräten, usw.) und
(5) überall dort, wo die Keimfreihaltung von Wasser oder von bestimmten wässerigen Lösungen gewährleistet sein muß.

Es empfiehlt sich, das mit dem erfindungsgemäßen Tabletten behandelte Wasser in Behältern aus Kunststoff, Keramik, Glas oder edleren Metallen als das in der Tablette enthaltene Metall bzw. in mit derartigen Stoffen ausgekleideten Behältern aufzubewahren, um die oligodynamische Wirkung der Metallionen nicht durch eine Reaktion mit unedleren Metallen zu stören.

Die in Wasser minimal erforderliche Konzentration an Silberionen, welche üblicherweise zu dessen Keimfreihaltung notwendig und hinreichend ist, beträgt 0,1 bis 1,0 mg/Liter.

Zur raschen und wirksamen Entkeimung hingegen, insbesondere bei zu erwartender massiver Rekontamination, sind jedoch initiale Silberionenkonzentrationen von bis etwa 5 mg/Liter angezeigt. Im allgemeinen werden die Silberverbindungen in solcher Menge eingesetzt, daß die Wirkstoffkonzentration höchstens 10 mg/Liter beträgt.

Im allgemeinen beträgt die Dosierung 200 mg schwerlösliche Silberverbindung für 10 bis 60 Liter Wasser, je nach der gewünschten Dauer der Sterilhaltung.

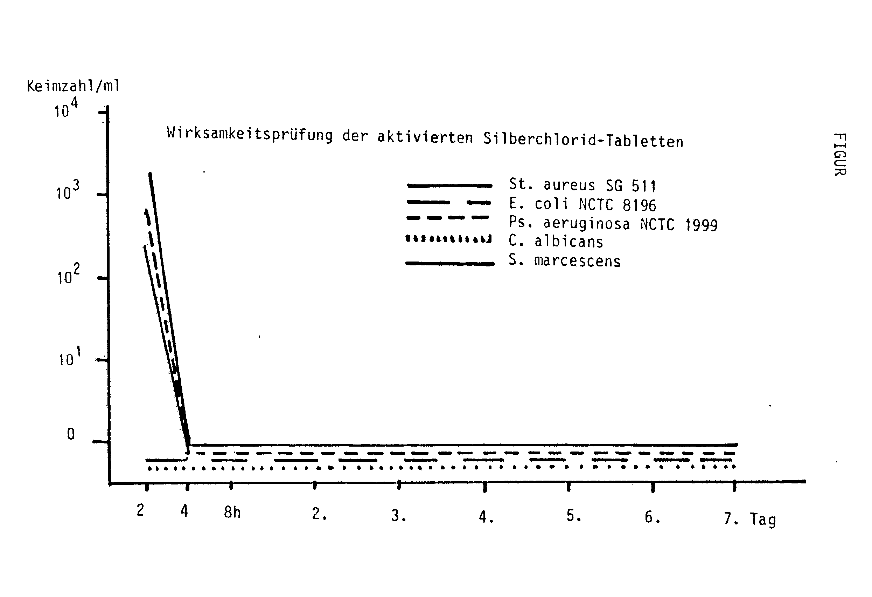

Die Erfindung wird anhand des folgenden Beispiels und unter Bezugnahme auf die beiliegende Zeichnung näher erläutert, welche die Wirksamkeit einer aktivierten Silberchlorid-Tablette gegen verschiedene Mikroorganismen in Abhängigkeit der Zeit darstellt.

## Beispiel

Handelsübliches Silberchlorid wurde mit einem Druck von 981 MPa bei Zimmertemperatur zu Tabletten von je 200 mg gepreßt. Nach der Entnahme aus der Presse wurden die Tabletten zur Aktivierung einzeln durch eine Bunsenbrennerflamme gezogen, wobei die Oberfläche leicht anschmolz. Die derart erhaltenen Tabletten wurden in einem geschlossenen Gefäß im Dunkeln aufbewahrt. Die Tabletten dunkeln bei Lichteinwirkung nach, ohne indessen irgendwelche Färbung des Wassers zu bewirken.

Die derart erhaltenen Tabletten wurden wie folgt auf die Wirksamkeit geprüft:

## A) Experimentelle Wirksamkeitsprüfung der Silberchloridtablette

Eine Tablette wurde zu 100 ml sterilem Aqua dest. in einem Glasgefäß mit Schraubverschlußkappe zugesetzt.

Als Inokulum wurden je 3 Tropfen einer 48-stündigen Bouillonkultur (Trypticase Soy Broth BBL) der folgenden Referenzstämme bzw. Keime aus einem Routine-Untersuchungsmaterial benutzt:

| | |
|---|---|
| Staphylococcus aureaus SG 511 | $7 \times 10^{11}$ Keime/ml |
| E. coli NCTC 8196 | $7 \times 10^{13}$ Keime/ml |
| Pseudomonas aeruginos NCTC | $1 \times 10^{13}$ Keime/ml |
| Serratia marcescens | $3 \times 10^{13}$ Keime/ml |
| Candida albicans | $2 \times 10^{7}$ Keime/ml |

Nach 2, 4 und 8 Stunden wurde die beimpfte Flüssigkeitsmenge durch Schwenken gut durchgemischt und mittels steriler Pipetten wurden Proben entnommen.

Die entsprechenden Verdünnungen ($1 \times 10^{-1}$ bis $1 \times 10^{-5}$) wurden membranfiltriert (Gelman Membran Filter Metricel® GN 6, bei einer Filtriergeschwindigkeit von 2 Liter pro Minute). Die Probenentnahmen erfolgten nach Auswertung der Stundenwerte später täglich. Die Membranfilter wurden jeweils auf eine CLED-(Cysteine Lactose Electrolyte Deficient Agar BBL) Platte aufgelegt und 48 Stunden bei 37°C inkubiert. Da sich im Temperaturbereich von 20 bis 37°C kein signifikanter Unterschied bezüglich der oligodynamischen Silberwirkung feststellen ließ, wurden die weiteren Prüfungen bei Zimmertemperatur ausgeführt. Die Resultate sind aus der beiliegenden Zeichnung ersichtlich.

## B) Praktische Versuche zur Keimfreihaltung von Wasser in Atemluftbefeuchtern

Unmittelbar nachdem das Befeuchtungssystem durch ein ebensolches steriles ersetzt worden war, wurde mit einer sterilen Spritze 10 ml Wasse raus der Wasserkammer für eine Keimzahlbestimmung entnommen und anschließend die Silberchloridtablette eingesetzt (=erste Probenentnahme). Aus den Wasserkammern wurden nun täglich Proben (10 ml) entnommen und qualitative und quantitative Keimbestimmungen durchgeführt.

Die Untersuchungsdauer lag zwischen 5 und 11 Tagen. Während dieser Zeit wurden weder das Befeuchtungssystem noch die eventuell vorhandenen Atemschläuche ersetzt, die bis anhin beide täglich gewechselt worden waren, lediglich der Wasserverlust in der Wasserkammer wurde nach Bedarf mit sterilem Aqua dest. ergänzt.

Die Resultate dieser Unterlagen sind in den Tabelle II bis IV zusammengestellt.

Tabelle II

Getestete Befeuchtungssysteme

| Anzahl Patienten | Befeuchtungssystem | | |
|---|---|---|---|

| 31 | de Vilbis | 23 intubierte oder tracheotomierte Patienten | 16 Patienten Chirurgie Intensivstation |
| | | | 7 Patienten Medizin Intensivstation |
| | | 8 nicht beatmete Patienten | 6 Patienten Verbrennungsstation |
| | | | 2 Patienten ORL Intensivstation |
| 23 | Bennett/ Cascade | — 23 tracheotomierte oder intubierte Patienten | 10 Patienten Chirurgie Intensivstation |
| | | | 13 Patienten Medizin Intensivstation |
| 8 | Bird | ——— 8 tracheotomierte oder intubierte Patienten Medizin Intensivstation | |

Insgesamt wurden im Untersuchungszeitraum 457 Proben entnommen und mittels qualitativer und quantitativer Keimbestimmung ausgewertet. Die Resultate sind aus den folgenden Tabellen 2 und 3 ersichtlich:

Tabelle III

| Befeuchtungssystem | Patienten Anzahl | Klinik | Zeitverlauf und Befund Tage 1 2 3 4 5 6 7 8 9 10 11 |
|---|---|---|---|
| De Vilbis | 2 | ORL Intensivstation | ●⌐══════════════⌐ 2 × ↓ ● System seit 12 Stunden in Betrieb: $10^4$ Kol./ml Pseudomonas aeruginosa Zugabe der Silbertablette ab 2. Tag: kein Wachstum |
| Bennett/ Cascade | 1 | Chirurgie Intensivstation | ●⌐═══════════⌐ 1 × ↓ ● System seit 2 Stunden in Betrieb: 60 Kol./ml Pseudomonas aeruginosa Zugabe der Silbertablette ab 2. Tag: kein Wachstum |
| De Vilbis | 1 | Chirurgie Intensivstation | ●⌐══════⌐ 1 × ↓ ● System seit 8 Stunden in Betrieb: $3 \times 10^3$ Kol./ml Citrobacter Zugabe der Silbertablette ab 2. Tag: kein Wachstum |

Tabelle IV

| Befeuch-tungssystem | Patienten-anzahl | Klinik | Zeitverlauf (Tage) | Befund |
|---|---|---|---|---|
| | | | 1  2  3  4  6  6  7  8  8  10  11 | |
| De Vilbis | 15 | Chirurgie Intensivstation | ▭ 1 × | kein Wachstum |
| | | | ▭ 1 × | |
| | | | ▭ 1 × | |
| | | | ▭ 9 × | |
| | | | ▭ 1 × | |
| | | | ▭ 2 × | |
| Bennett/ Cascade | 9 | Chirurgie Intensivstation | ▭ 1 × | kein Wachstum |
| | | | ▭ 1 × | |
| | | | ▭ 1 × | |
| | | | ▭ 3 × | |
| | | | ▭ 3 × | |
| De Vilbis | 7 | Medizin Intensivstation | ▭ 1 × | kein Wachstum |
| | | | ▭ 5 × | |
| | | | ▭ 1 × | |
| Bennett/ Cascade | 13 | Medizin Intensivstation | ▭ 3 × | kein Wachstum |
| | | | ▭ 8 × | |
| | | | ▭ 2 × | |
| Bird | 8 | Medizin Intensivstation | ▭ 5 × | kein Wachstum |
| | | | ▭ 2 × | |
| | | | ▭ 1 × | |
| nicht | | beatmete | Patienten | |
| De Vilbis | 6 | Verbrennungs-station | ▭ 2 × | kein Wachstum |
| | | | ▭ 1 × | |
| | | | ▭ 3 × | |

**Patentansprüche**

1. Verfahren zur Herstellung von metallsalzhaltigen Tabletten zur Keimfreihaltung von Wasser und wässerigen Lösungen mit protrahierter Wirkstoff-Freigabe, welche Tabletten in der wässerigen Umgebung nicht zerfallen, dadurch gekennzeichnet, daß man mindestens eine in Wasser schwerlösliche, die Entwicklung von Keimen verhindernde Metallverbindung mit oder ohne Trägersubstanzen unter einem Druck von mindestens 785 MPa verformt und die Tablette aktiviert, indem man sie derart behandelt, daß sie erst eine schwerlösliche Metallverbindung mit einer Löslichkeit von höchstens 100 mg/Liter im Wasser bilden, wobei eine rasche einmalige Entkeimungswirkung durch eine oligodynamischen wirksamen Konzentration an Metallionen gemäß dem Löslichkeitsprodukt des Salzes erzielt wird, und daß nachher diese wirksame Konzentration bis zur vollständigen Auflösung der Metallverbindung konstant bleibt.

2. Verfahren nach Patentanspruch 1, dadurch gekennzeichnet, daß die Aktivierung durch thermische oder chemische Behandlung oder durch Dotieren mit einer leichter löslichen Metallverbindung erfolgt.

3. Verfahren nach Patentanspruch 1 oder 2, dadurch gekennzeichnet, daß die Tablette mit einem nur für den gelösten Wirkstoff durchlässigen Schutzumschlag versehen wird.

4. Verfahren nach einem der Patentansprüche 1 bis 3, dadurch gekennzeichnet, daß der zu verformenden Masse weitere Hilfsstoffe zugesetzt wird.

5. Verwendung von nach den Patentansprüchen 1 bis 4 hergestellten Tabletten zur Keimfreihaltung von Wasser oder wässerigen Lösungen, dadurch gekennzeichnet, daß die Wirkstoffkonzentration höchstens 10 mg/Liter beträgt.

6. Verwendung nach Patentanspruch 5 zur Keimfreihaltung von Wasser oder wässerigen Lösungen in Belüftungs- und Befeuchtungsanlagen, insbesondere in Spitälern.

**Claims**

1. A process for the manufacture of metal-salt-containing tablets for asepticizing water and aqueous solution with delayed release of effective substances, which tablets do not disintegrate in the aqueous environment, characterised in that at least one metal compound which is difficultly soluble in water and which prevents the development of germs is shaped, with or without carrier substances, under a pressure of at least 785 MPa, and the tablets are activated by treating them in such a way that they first form a difficultly soluble metal compound having a solubility of no more than 100 mg/litre in water, a rapid and single sterilizing action being achieved by an oligodynamically effective concentration of metal ions in accordance with the solubility product of the salt, and that this effective concentration thereafter remains constant until the metal compound has been fully dissolved.

2. A process as claimed in claim 1, characterised in that activation is effected by thermal or chemical treatment or by doping with a more easily soluble metal compound.

3. A process as claimed in claim 1 or 2, characterised in that the tablet is provided with a protective covering which is permeable only to the dissolved effective substance.

4. A process as claimed in one of claims 1 to 3, characterised in that further auxiliary substances are added to the mass to be shaped.

5. The use of tablets, manufactured in accordance with claims 1 to 4, for asepticizing water or aqueous solutions, characterised in that the concentration of effective substance is no more than 10 mg/litre.

6. The use, as claimed in claim 5, for the asepticizing of water or aqueous solutions in ventilation and humidification systems, particularly in hospitals.

**Revendications**

1. Procédé de préparation de comprimés contenant des sels métalliques pour l'aseptisation de l'eau et de solutions aqueuses par la libération prolongée de substance active, lesquels comprimés ne se désagrègent pas en milieu aqueux, caractérisé par le fait que l'on façonne au moins une combinaison métallique difficilement soluble dans l'eau, inhibant le développement de germes, avec au sans supports, sous une pression d'au moins 785 MPa et que l'on active les comprimés en les traitant de telle sorte qu'ils constituent seulement une combinaison métallique difficilement soluble, d'une solubilité maximale de 100 mg/litre dans l'eau, ce qui a pour effet un effet unique rapide de stérilisation grâce à une concentration oligodynamique active en ions métalliques suivant le produit de solubilité du sel, et qu'ensuite cette concentration efficace reste constante jusqu'à la dissolution complète de la combinaison métallique.

2. Procédé suivant la revendication I, caractérisé par le fait que l'activation s'effectue par traitement thermique ou chimique ou par adjonction d'une combinaison métallique plus facilement soluble.

3. Procédé suivant la revendication I ou 2, caractérisé par le fait que les comprimés sont munis d'une enveloppe protectrice qui n'est perméable qu'à la substance active dissoute.

4. Procédé suivant l'une des revendications I à 3, caractérisé par le fait que d'autres produits auxiliaires sont ajoutés à la matière à façonner.

5. Utilisation de comprimés fabriqués suivant les revendications I à 4 pour l'aseptisation de l'eau ou de solutions aqueuses, caractérisée par le fait que la concentration en substance active est au maximum de 10 mg/litre.

6. Utilisation suivant la revendication 5 pour l'aseptisation de l'eau ou de solutions aqueuses dans des installations d'aération et d'humidification, en particulier dans les hôpitaux.

Wirksamkeitsprüfung der aktivierten Silberchlorid-Tabletten

St. aureus SG 511
E. coli NCTC 8196
Ps. aeruginosa NCTC 1999
C. albicans
S. marcescens

Keimzahl/ml

FIGUR

0 075 566